# FASCICULE DE BREVET EUROPEEN

(11) **EP 1 027 380 B1**
(45) Date de publication et mention de la délivrance du brevet: **08.10.2003**
(21) Numéro de dépôt: 98954515.7
(22) Date de dépôt: 04.11.1998
(51) Int. Cl.: C08G 18/02, C08G 18/18, C08G 18/20

(54) **CATALYSEUR ET PROCEDE DE TRIMERISATION D'ISOCYANATES**
KATALYSATOR UND VERFAHREN ZUR TRIMERISIERUNG VON ISOCYANATEN
CATALYST AND METHOD FOR TRIMERIZATION OF ISOCYANATES

(30) Priorité: 04.11.1997 FR 9713855; 04.11.1997 FR 9713856
(43) Date de publication de la demande: 16.08.2000
(73) Titulaire: RHODIA CHIMIE, 92408 Courbevoie Cédex (FR)
(72) Inventeur: REVELANT, Denis, F-69740 Genas (FR); BERNARD, Jean-Marie, F-69440 Mornant (FR)
(74) Mandataire: Jacobson, Claude
(86) Numéro de dépôt international: FR9802359
(87) Numéro de publication internationale: WO99023128

(56) Documents cités:
- EP-A- 0 003 765
- EP-A- 0 351 873
- EP-A- 0 443 167
- US-A- 3 980 594
- US-A- 4 040 992
- US-A- 4 542 214
- US-A- 5 489 663
- DATABASE WPI Week 8233 Derwent Publications Ltd., London, GB; AN 82-69346e XP002060412 & JP 57 111310 A (ACHILLES CORP.) , 10 juillet 1982

## Description

L'invention a pour objet un catalyseur utile pour la cyclotrimérisation catalytique d'isocyanates monomères en polyisocyanates (poly)isocyanurates.

II est connu de préparer des trimères d'isocyanates par trimérisation catalytique d'un isocyanate en mettant en oeuvre un catalyseur à base d'un hydroxyde d'ammonium quaternaire.

Ainsi, EP-003 765 décrit la cyclotrimérisation partielle de l'isophorone diisocyanate (IPDI ou 1-isocyanato-3,3,5-triméthyl-5-isocyanatométhyl-cyclohexane) en mettant en oeuvre en tant que catalyseur un hydroxyde d'un hydroxyalkylammonium quaternaire.

D'une manière générate, les catalyseurs à base d'un hydroxyde d'ammonium quaternaire ont une réactivité très forte qui rend difficile le contrôle de la réaction de trimérisation, en particulier lorsque l'isocyanate de départ est un isocyanate aliphatique ou cycloaliphatique.

En outre, le contrôle de la réaction est rendu plus difficile encore du fait des variations possibles de la teneur en chlore hydrolysable de l'isocyanate de départ, provenant du procédé de phosgènation utilisé pour la synthèse de ces isocyanates.

On sait ainsi que l'efficacité du catalyseur diminue lorsque la teneur en chlore hydrolysable contenue dans l'IPDI augmente.

La teneur en chlore hydrolysable influe par ailleurs sur la coloration du brut réactionnel qui augmente d'autant que la quantité de chlore est élevée.

US 4,040,992 décrit par ailleurs des catalyseurs de trimérisation catalytique d'isocyanates de type sels d'ammonium quaternaires dont l'anion est représenté par OH⁻, ou la formule -OOC-(O)ₐ-Y dans laquelle Y est choisi parmi:
un atome d'hydrogène,
un groupe alkyle ayant de 1 à 20 atomes de carbone,
un groupe aikényle ayant de 2 à 15 atomes de carbone,
un groupe cycloalkyle ayant de 3 à 6 atomes de carbone,
un groupe phényle,
un groupe alkylphényle ayant de 1 à 9 atomes de carbone dans le reste alkyle ou dans les groupes liés au noyau phényle,
un groupe benzyle,
un groupe carbamate,
un groupe alkylbenzyle ayant de 1 à 9 atomes de carbone dans le reste alkyle ou dans les groupes liés au noyau benzyle, et
un groupe CH_{(3-b})Z_{(b)} dans lequel b est un nombre entier de 1 à 3 et Z est OH, CN, Cl, un groupe alkoxy de 1 à 5 atomes de carbone, ou un groupe phényle ou méthoxyphényle, ou
Z est (CH₂)_{d}COOR dans lequel d est un nombre entier de 0 à 4 et R est un atome d'hydrogène ou un groupe alkyle ayant jusqu'à 20 atomes de carbone ;
et a est égal à zéro ou 1.

Cependant, les anions illustrés dans ce brevet sont tous des anions dérivés d'acide alkylcarboxylique. De manière générale, les catalyseurs décrits dans ce document ne permettent pas d'aboutir au but recherché.

Le but de l'invention est de fournir un catalyseur de cyclotrimérisation d'isocyanates, notamment de diisocyanates qui permette un contrôle de la réaction, tout en ayant un taux de transformation acceptable, qui ne soit pas dépendant de façon substantielle de la teneur en chlore hydrolysable, de l'isocyanate de départ et permette d'obtenir un produit dont la coloration n'est pas marquée de façon importante.

On a maintenant découvert de manière surprenante que les catalyseurs de type ionique dont le contre-anion est l'anion hydrogénocarbonate permettraient d'aboutir au but recherché.

Ces catalyseurs sont formés d'un cation mono-atomique ou poly-atomique volumineux, soit en tant que tel, soit sous la forme d'un complexe formé avec un agent complexant, notamment de type cryptant.

L'invention a ainsi pour objet l'utilisation en tant que catalyseur de réaction de cyclotrimérisation d'isocyanates d'un hydrogénocarbonate d'un cation qui, soit en tant que tel, soit sous forme complexée avec un agent complexant, a un rayon ionique ou moléculaire moyen supérieur à 1 Å, de préférence supérieur à 1,5 Å, tel que défini dans les tables de M. Shannon et Prewitt dans Acta Cris, 1969, vol. B25, page 925 et qui est au moins partiellement soluble dans le milieu réactionnel.

Avantageusement, le cation est choisi parmi les cations de métaux alcalins volumineux, notamment le rubidium et le césium.

Le cation peut également consister en un cation de métal alcalin léger, sous forme complexée. On peut citer notamment les cations sodium et potassium complexés par des éther couronnes.

Le cation peut également consister en une espèce moléculaire, dans laquelle tous les atomes sont liés par des liaisons covalentes.

On citera à ce titre les cations de type "onium" dont les espèces représentatives sont les phosphoniums, sulfoniums et ammoniums quaternaires.

On préfère en particulier les hydrogénocarbonates des cations de formule I suivante : 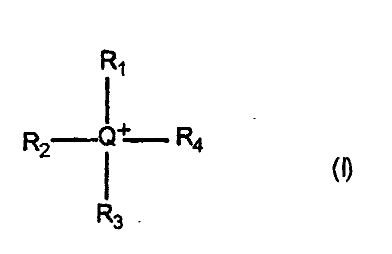 dans laquelle
Q représente un atome d'azote, de phosphore ou de soufre ; et
R₁, R₂, R₃ et R₄ identiques ou différents désignent des groupes alkyle, éventuellement hydroxylés, ayant 1 à 20 atomes de carbone, des restes cycloalkyle ayant de 4 à 15 atomes de carbone, éventuellement substitués avec des groupes hydroxyle, des restes aralkyle ayant 7 à 15 atomes de carbone, éventuellement substitués avec des groupes hydroxyle ou des restes aryle ayant 6 à 15 atomes de carbone, éventuellement substitués avec des groupes hydroxyle ou bien lorsque Q est N, deux des restes R₁, R₂, R₃ ou R₄ peuvent aussi former avec l'atome d'azote et, le cas échéant, avec un hétéro-atome notamment d'oxygène ou d'azote, un noyau hétérocyclique ayant 4 à 6 atomes de carbone, ou bien lorsque Q est N, les restes R₁, R₂ et R₃ représentent chacun des restes éthylène qui forment en association avec l'atome quaternaire d'azote et un autre atome tertiaire d'azote, un squelette de triéthylènediamine bicyclique,
ou l'un de R₁ à R₄ représente un groupe 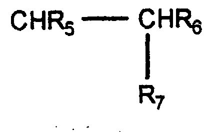
dans lequel R₅, R₆ et R₇ identiques ou différents représentent l'hydrogène, un groupe OH, un groupe alkyle ayant 1 à 12 atomes de carbone, un groupe cycloalkyle ayant 5 à 7 atomes de carbone, un groupe alkényle ayant de 2 à 15 atomes de carbone, un groupe alkynyle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₈-O-(CH₂)ₙ dans lequel R₈ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et n est un nombre entier allant de 1 à 6 ; R₇ pouvant en outre également représenter un groupe OCOR₉, R₉ étant un groupe alkyle en C₁-C₆, de préférence en C₁-C₄. plus particulièrement le groupe méthyle.

Le cation est plus particulièrement représenté par la formule générale II suivante : 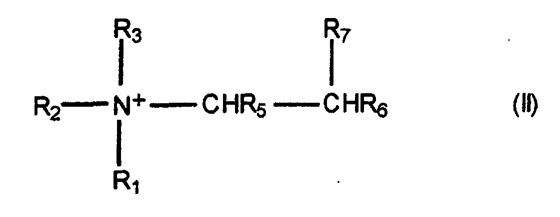
R₁, R₂ et R₃ représentent des restes identiques ou différents et désignent des groupes alkyle, éventuellement hydroxylés, ayant 1 à 20 atomes de carbone, des restes cycloalkyle ayant de 4 à 15 atomes de carbone, éventuellement substitués avec des groupes hydroxyle, des restes aralkyte ayant 7 à 15 atomes de carbone, éventuellement substitués avec des groupes hydroxyle ou des restes aryle ayant 6 à 15 atomes de carbone, éventuellement substitués avec des groupes hydroxyle, deux des restes R₁, R₂ ou R₃ pouvant aussi former avec l'atome d'azote et, le cas échéant, avec un hétéro-atome d'oxygène ou un autre hétéro-atome d'azote un noyau hétérocyclique ayant 4 à 6 atomes de carbone, ou bien les restes R₁, R₂ et R₃ représentant chacun des restes éthylène qui forment en association avec l'atome quaternaire d'azote et un autre atome tertiaire d'azote, un squelette de triéthylènediamine bicyclique,
R₅, R₆ et R₇ identiques ou différents représentent l'hydrogène, un groupe OH, un groupe alkyle ayant 1 à 12 atomes de carbone, un groupe cycloalkyle ayant 5 à 7 atomes de carbone, un groupe alkényle ayant de 2 à 15 atomes de carbone, un groupe alkynyle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₈-O-(CH₂)ₙ dans lequel R₈ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et n est un nombre entier allant de 1 à 6 ; R₇ pouvant en outre également représenter un groupe OCOR₉, R₉ étant un groupe alkyle en C₁-C₆, de préférence en C₁-C₄, plus particulièrement le groupe méthyle.

Un groupe de cations d'ammonium quaternaire préféré est constitué par les composés dans lesquels :
- R₁, R₂ et R₃ identiques ou différents représentent un groupe alkyle linéaire en C₁-C₄, de préférence alkyle en C₁-C₃, plus particulièrement alkyle en C₁-C₂, et de préférence méthyle,
- R₅ représente H, OH, le groupe méthyle ou le groupe hydroxyméthyle,
- R₆ représente H, OH, le groupe méthyle ou le groupe hydroxyméthyle,
- R₇ représente H, OH, le groupe méthyle, le groupe hydroxyméthyle ou le groupe acétyle,

Un autre groupe de cations d'ammonium quaternaire préféré est constitué par les composés dans lesquels :
- R₁, R₂ et R₃ identiques ou différents représentent un groupe alkyle en C₁-C₄, de préférence alkyle en C₁-C₃, plus particulièrement alkyle en C₁-C₂, et de préférence méthyle,
- R₅ représente H ou un groupe alkyle en C₁-C₄,
- R₆ représente H, OH ou un groupe alkyle en C₁-C₄,
- R₇ représente H, OH, un groupe alkyle en C₁-C₄ ou le groupe acétyle.
sans que le total des atomes de carbone de R₁ à R₇ excède 8, de préférence 6.

Plus avantageusement encore, on préfère les cations d'ammonium quaternaire dans lesquels au moins un, de préférence deux et de façon plus préférée les trois groupes de R₁ à R₃ représentent le groupe méthyle, R₅, R₆ et R₇ étant tels que définis ci-dessus, et de préférence un seul de R₅ à R₇ étant OH.

Un autre groupe de cations d'ammonium quaternaire préférés est celui dans lequel R₁ à R₃ représentent un groupe alkyle en C₁-C₄ un groupe hydroxyalkyle en C₁-C₄, et R₅ à R₇ représentent H ou OH, lesdits composés comportant avantageusement un seul groupe OH en position oméga par rapport à l'atome d'azote central.

Un catalyseur plus particulièrement préféré est l'hydrogénocarbonate de choline, notamment lorsque l'isocyanate que l'on veut cyclotrimériser est un diisocyanate cycloaliphatique, tels que le NBDI, l'IPDI ou le H₁₂MDI, ou un mélange d'un diisocyanate cycloaliphatique tel que mentionné précédemment et d'un diisocyanate aliphatique à chaîne linéaire ou ramifiée, notamment le HDI.

On peut également citer l'hydrogénocarbonate de tétraméthyle phosphonium ou sulfonium ainsi que l'hydrogénocarbonate de tétrapnényle phosphonium ou sulfonium.

Les catalyseurs selon l'invention sont des composés connus.

Ils peuvent être obtenus notamment dans les cas des ammoniums quaternaires, lorsque R₇ représente OH par réaction d'une aminé tertiaire de formule générale ll : 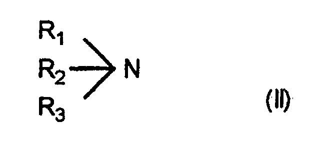 dans laquelle R₁ à R₃ sont tels que définis ci-dessus
avec un époxyde de formule générale III: 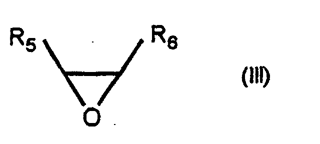 dans laquelle R₄ et R₅ sont tels que définis ci-dessus, en présence de CO₂ et d'H₂O.

Dans le cas des esters, l'ammonium quaternaire hydroxylé peut être estérifié à l'aide d'un acylimidazole par exemple. Dans le cas des éthers, on travaillera avec un excès d'époxy.

Le catalyseur selon l'invention peut être utilisé pour la cyclotrimérisation de tout type d'isocyanates, ou mélange d'isocyanates qu'ils soient aliphatiques, cycloaliphatiques ou aromatiques, y compris les prépolymères ayant des groupes isocyanates terminaux, notamment ceux décrits dans US 5,115,071.

Il peut ainsi être utilisé pour la trimérisation d'isocyanates en présence de divers diols, triols et autres polyols dont les poids moléculaires se situent dans une large gamme, y compris les polyols et aminopolyols comprenant des groupes polyéther et polyester, employés pour la production de résines polyuréthanes et polyisocyanurates.

Il est avantageusement utilisé pour la cyclotrimérisation de l'IPDI (isophorone diisocyanate ou 1-isocyanato-3,3,5-triméthyl-5-isocyanato méthyl cyclohexane), du NBDI (norbomane diisocyanate ou 2,5(6)-diisocyanato-méthyl-bicyclo[2,2,1)heptane) et de l'H₁₂MDI (diisocyanate de 4,4'-dicyclohexylméthanediyle), seuls ou en mélange avec d'autres diisocyanates, notamment à chaîne aliphatique linéaire, tels que l'HDI (hexaméthylène diisocyanate).

Avantageusement, on ajoute le catalyseur suivant l'invention en une quantité comprise entre 300 et 5000 ppm, de préférence entre 500 et 3500 ppm par rapport à la quantité totale des isocyanates de départ.

Le catalyseur est ajouté au milieu réactionnel sous agitation, de préférence en l'absence de solvant. On laisse la réaction se dérouler pendant une durée variant entre 1 h et 4 h, de préférence environ une heure et demie.

La réaction est conduite avantageusement à une température comprise entre la température ambiante et 120°C de préférence entre 40 et 100°C, avantageusement sous atmosphère neutre.

L'invention a également pour objet l'utilisation du catalyseur sous une forme solide tel que par exemple obtenue par dépôt du catalyseur sur un minéral tel que la silice, ou par fixation covalente sur une résine.

L'invention a également pour objet une composition polyisocyanate (poly)isocyanurate obtenue par le procédé selon l'invention, notamment comprenant les composés suivants :
- le trimère du NBDI,
- le trimère du H₁₂MDl.
- le trimère de l'lPDl,
- les trimères mixtes NBDl, IPDI/HDI ou H₁₂MDI/HDI,
dans lesquels la proportion d'HDI peut varier de 5 à 95 % en poids.

Les produits obtenus peuvent ultérieurement subir une réaction chimique : dimérisation, allophanatation, biurétisation, réaction de blocage par un agent bloquant (ou masquant) soit avant, soit après distillation du monomère.

Les composés obtenus sont utilisés pour la préparation de revêtements, notamment comme constituants de base pour vernis et peintures.

Les exemples suivants illustrent l'invention.

### EXEMPLE 1 : Préparation d'isophorone diisocyanate trimère (IPDT).

On charge dans un réacteur de 11, 800 g d'IPDI. On agite sous courant d'argon et on porte à la température de 85°C.

Lorsque la température est stabilisée, on charge 0,56 g (0,07 % en poids) de bicarbonate de choline. On laisse la réaction se poursuivre pendant 3 heures en suivant l'évolution du taux de transformation de l'IPDl par mesure du titre en NCO (par potentiométrie).

On obtient 80 g de l'IPDT correspondant à un taux de transformation de 10 %:

### EXEMPLE 2 : Préparation d'isophorone diisocyanate trimère (IPDT).

On procède comme pour l'exemple 1 sauf que l'on ajoute 1,6 g (0,2 % en poids) de bicarbonate de choline et qu'on chauffe la réaction jusqu'à 60°C.

On obtient 320 g d'IPDT correspondant à un taux de transformation d'IPDI de 40 %.

### EXEMPLES 3 à 5 : Exemples comparatifs

On a par ailleurs comparé la réactivité de l'hydrogénocarbonate de choline à celle de l'hydroxyde de choline, du bisulfite de choline et du bitartrate de choline.

Les résultats des exemples 1 à 5 sont rapportés dans le tableau ci-dessous.

| Exemples | Catalyseur | [cata] * % en poids | Température de réaction (°C) | TT IPDI (%) |
|---|---|---|---|---|
| 1 | Choline bicarbonate | 0,07 | 85 | 10 |
| 2 | Choline bicarbonate | 0,2 | 60 . | 40 |
| 3 | Choline hydroxyde | 0,07 | 85 | 40 |
| 4 | choline bisulfite | 0,07 | 85 | 0 |
| 5 | Choline bitartrate | 0,2 | 80 | 0 |

| | | | | |
|---|---|---|---|---|
| * Les [cata] sont calculées à partir des sels de choline à 100 %. | | | | |

Il apparaît que des différents sels de choline, seul le bicarbonate présente une activité catalytique plus faible et plus facilement contrôlable, à savoir une activité 2,8 fois moindre que celle de l'hydroxyde de choline.

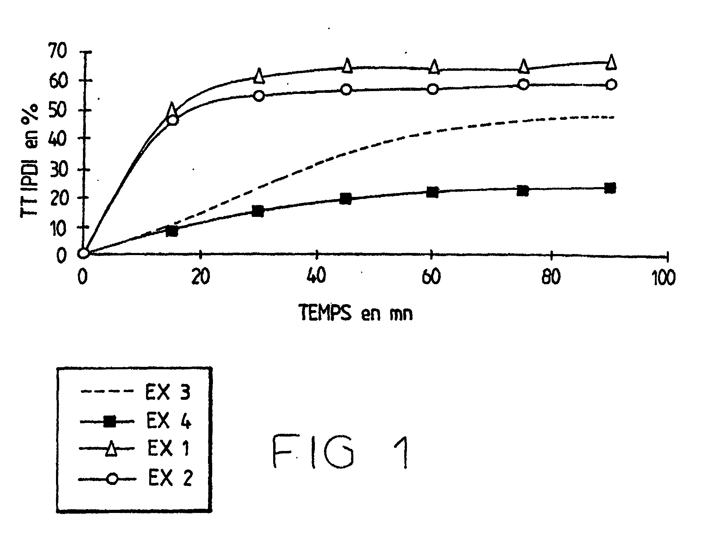

## Revendications

1. Utilisation en tant que catalyseur de réaction de cyclotrimérisation d'isocyanates d'un hydrogénocarbonate d'un cation qui, soit en tant que tel, soit sous forme complexée avec un agent complexant, a un rayon ionique ou moléculaire moyen supérieur à 1 Å, de préférence à 1,5 Å, et qui est au moins partiellement soluble dans le milieu réactionnel.

2. Utilisation selon la revendication 1, **caractérisée en ce que** les isocyanates sont choisis parmi l'isophorone di-isocyanate, le norbomane di-isocyanate et le di-isocyanate de 4,4'-dicyclohexylméthanedi-yle, seuls ou en mélange avec d'autres di-isocyanates.

3. Utilisation selon l'une dès revendications 1 à 2, **caractérisée en ce que** le cation répond à la formule générale I : 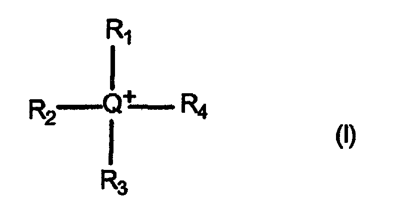 dans laquelle
Q représente un atome d'azote, de phosphore ou de soufre ; et
R₁, R₂, R₃ et R₄ identiques ou différents désignent des groupes alkyle, éventuellement hydroxylés, ayant 1 à 20 atomes de carbone, des restes cycloalkyle ayant de 4 à 15 atomes de carbone, éventuellement substitués avec des groupes hydroxyle, des restes aralkyle ayant 7 à 15 atomes de carbone, éventuellement substitués avec des groupes hydroxyle ou des restes aryle ayant 6 à 15 atomes de carbone, éventuellement substitués avec des groupes hydroxyle ou bien lorsque Q est N, deux des restes R₁, R₂, R₃ ou R₄ peuvent aussi former avec l'atome d'azote et, le cas échéant, avec un hétéro-atome notamment d'oxygène ou d'azote, un noyau hétérocyclique ayant 4 à 6 atomes de carbone, ou bien lorsque Q est N, les restes R₁, R₂ et R₃ représentent chacun des restes éthylène qui forment en association avec l'atome quaternaire d'azote et un autre atome tertiaire d'azote, un squelette de triéthylènediamine bicyclique,
ou l'un de R₁ à R₄ représente un groupe 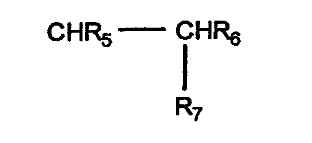
dans lequel R₅, R₆ et R₇ identiques ou différents représentent l'hydrogène, un groupe OH, un groupe alkyle ayant 1 à 12 atomes de carbone, un groupe cycloalkyle ayant 5 à 7 atomes de carbone, un groupe alkényle ayant de 2 à 15 atomes de carbone, un groupe alkynyle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₈-O-(CH₂)ₙ dans lequel R₈ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et n est un nombre entier allant de 1 à 6 ; R₇ pouvant en outre également représenter un groupe OCOR₉, R₉ étant un groupe alkyle en C₁-C₆, de préférence en C₁-C₄, plus particulièrement le groupe méthyle.

4. Utilisation selon la revendication 3 **caractérisée en ce que** le cation répond à la formule générale (II) suivante : 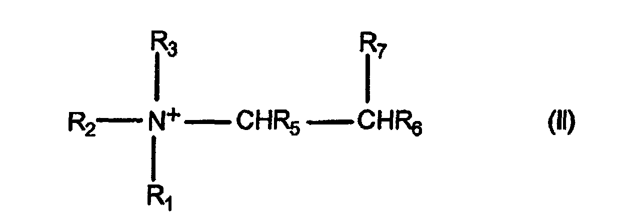 dans laquelle
R₁, R₂ et R₃ représentent des restes identiques ou différents et désignent des groupes alkyle, éventuellement hydroxylés, ayant 1 à 20 atomes de carbone, des restes cycloalkyle ayant de 4 à 15 atomes de carbone, éventuellement substitués avec des groupes hydroxyle, des restes aralkyle ayant 7 à 15 atomes de carbone, éventuellement substitués avec des groupes hydroxyle ou des restes aryle ayant 6 à 15 atomes de carbone, éventuellement substitués avec des groupes hydroxyle, deux des restes R₁, R₂ ou R₃ pouvant aussi former avec l'atome d'azote et, le cas échéant, avec un hétéro-atome d'oxygène ou un autre hétéro-atome d'azote un noyau hétérocydique ayant 4 à 6 atomes de carbone, ou bien les restes R₁, R₂ et R₃ représentent chacun des restes éthylène qui forment en association avec l'atome quaternaire d'azote et un autre atome tertiaire d'azote, un squelette de triéthylènediamine bicyclique,
R₅, R₆ et R₇ identiques ou différents représentent l'hydrogène, un groupe OH, un groupe alkyle ayant 1 à 12 atomes de carbone, un groupe cycloalkyle ayant 5 à 7 atomes de carbone, un groupe alkényle ayant de 2 à 15 atomes de carbone, un groupe alkynyle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₈-O-(CH₂)n dans lequel R₈ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et n est un nombre entier allant de 1 à 6 ; R₇ pouvant en outre également représenter un groupe OCOR₉, R₉ étant un groupe alkyle en C₁-C₆, de préférence en C₁-C₄, plus particulièrement le groupe méthyle.

5. Utilisation selon l'une des revendications 1 à 2, **caractérisée en ce que** :
- R₁, R₂ et R₃ identiques ou différents représentent un groupe alkyle linéaire en C₁-C₄, de préférence alkyle en C₁-C₃, plus particulièrement alkyle en C₁-C₂, et de préférence méthyle,
- R₅ représente H, OH, le groupe méthyle ou le groupe hydroxyméthyle,
- R₆ représente H, OH, le groupe méthyle ou le groupe hydroxyméthyle,
- R₇ représente H, OH, le groupe méthyle, le groupe hydroxyméthyle ou le groupe acétyle.

6. Utilisation selon l'une des revendications 1 à 2, **caractérisée en ce que** :
- R₁, R₂ et R₃ identiques ou différents représentent un groupe alkyle en C₁-C₄, de préférence alkyle en C₁-C₃, plus particulièrement alkyle en C₁-C₂, et de préférence méthyle,
- R₅ représente H ou un groupe alkyle en C₁-C₄,
- R₆ représente H, OH ou un groupe alkyle en C₁-C₄,
- R₇ représente H, OH, un groupe alkyle en C₁-C₄ ou le groupe acétyle,
sans que le total des atomes de carbone de R₁ à R₇ excède 8, de préférence 6.

7. Utilisation selon l'une des revendications 1 à 2, **caractérisée en ce qu'**au moins un, de préférence deux et de façon plus préférée les trois groupes de R₁ à R₃ représentent le groupe méthyle, R₅, R₆ et R₇ étant tels que définis ci-dessus, et de préférence un seul de R₅ à R₇ étant OH.

8. Utilisation selon l'une des revendications 1 à 2, **caractérisée en ce que** R₁ à R₃ représentent un groupe alkyle en C₁-C₄, un groupe hydroxyalkyle en C₁-C₄, et R₅ à R₇ représentent H ou OH, lesdits composés comportant avantageusement un seul groupe OH en position oméga par rapport à l'atome d'azote central.

9. Utilisation selon l'une des revendications 1 à 2, **caractérisée en ce que** le composé est l'hydrogénocarbonate de choline.

10. Utilisation selon l'une des revendications 1 à 2, **caractérisée en ce que** le catalyseur est sous forme solide obtenue par dépôt de l'hydrogénocarbonate sur un minéral ou fixation covalente sur une résine.

11. Utilisation selon l'une quelconque des revendications précédentes, **caractérisée en ce que** la quantité de catalyseur est de 300 ppm à 5000 ppm (exprimé en poids), avantageusement de 500 ppm à 3500 ppm, par rapport à la quantité total des isocyanates de départ.

12. Utilisation selon l'une quelconque des revendications précédentes, pour la préparation du trimère de l'isophorone di-isocyanate ou d'un trimère mixte d'isophorone di-isocyanate et d'hexaméthylène di-isocyanate dans lequel la proportion d'hexaméthylène di-isocyanate varie de 5 à 95 % en poids.

13. Utilisation selon l'une quelconque des revendications 1 à 11 pour la préparation du trimère de norbomane di-isocyanate ou d'un trimère mixte de norbomane di-isocyanate et d'hexaméthylène di-isocyanate dans lequel la proportion d'hexaméthylène di-isocyanate varie de 5 à 95 % en poids.

14. Utilisation selon l'une quelconque des revendications 1 à 11 pour la préparation du trimère de di-isocyanate de 4,4'-dicyclohexylméthanediyle ou d'un trimère mixte de di-isocyanate de 4,4'-dicyclohexylméthanediyle et d'hexaméthylène di-isocyanate dans lequel la proportion d'hexaméthylène di-isocyanate varie de 5 à 95 % en poids.

## Patentansprüche

1. Verwendung von einem Hydrogencarbonat eines Kations als Katalysator in einer Cyclotrimerisierungsreaktion von Isocyanaten, das als solches oder in komplexierter Form mit einem Komplexierungsagens einen mittleren Ionen- oder Molekülradius von grösser als 1Å, vorzugsweise als 1.5Å hat, und das mindestens teilweise in dem Reaktionsmedium löslich ist.

2. Verwendung nach Anspruch 1, **dadurch gekennzeichnet, dass** die Isocyanate ausgewählt aus der Gruppe von Isophorondiisocyanat, Norbornandiisocyanat und 4,4'-Dicyclohexylmethandi-yl-diisocyanat sind, wobei sie alleine oder als Mischung mit anderen Diisocyanaten vorliegen können.

3. Verwendung nach einem der Ansprüche 1 bis 2, **dadurch gekennzeichnet, dass** das Kation der allgemeinen Formel I entspricht: 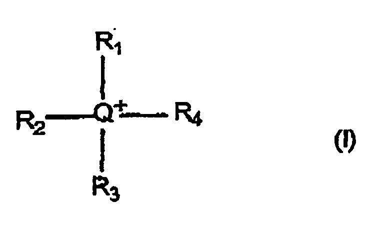 in der
Q ein Stickstoff-, Phosphor- oder Schwefelatom darstellt; und
R₁, R₂, R₃ und R₄ gleich oder verschieden sind und Alkylgruppen mit 1 bis 20 Kohlenstoffatomen, die gegebenenfalls hydroxyliert sind, Cycloalkylreste mit 4 bis 15 Kohlenstoffatomen, die gegebenenfalls mit Hydroxylgruppen substituiert sind, Aralkylreste mit 7 bis 15 Kohlenstoffatomen, die gegebenenfalls mit Hydroxylgruppen substituiert sind oder Arylreste mit 6 bis 15 Kohlenstoffatomen, die gegebenenfalls mit Hydroxylgruppen substituiert sind, bezeichnen, oder, falls Q gleich N ist, zwei der Reste R₁, R₂, R₃ oder R₄ auch mit dem Stickstoffatom und gegebenenfalls mit einem Heteroatom, insbesondere Sauerstoff oder Stickstoff, einen heterocyclischen Ring mit 4 bis 6 Kohlenstoffatomen bilden können, oder wenn Q gleich N ist, die Reste R₁, R₂ und R₃ jeder einen ethylenischen Rest darstellen, die in Verbindung mit dem quaternären Stickstoffatom und einem weiteren tertiären Stickstoffatom ein Skelett eines bicyclischen Triethylendiamins bilden,
oder einer von R₁ bis R₄ eine Gruppe 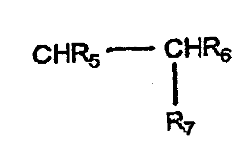
darstellt,
in der R₅, R₆ und R₇ gleich oder verschieden sind und Wasserstoff, eine OH-Gruppe, eine Alkylgruppe mit 1 bis 12 Kohlenstoffatomen, eine Cycloalkylgruppe mit 5 bis 7 Kohlenstoffatomen, eine Alkylengruppe mit 2 bis 15 Kohlenstoffatomen, eine Alkylengruppe mit 3 bis 6 Kohlenstoffatomen, eine Hydroxyalkylgruppe mit 1 bis 9 Kohlenstoffatomen, eine Aralkylgruppe mit 7 bis 10 Kohlenstoffatomen, eine Arylgruppe mit 6 bis 10 Kohlenstoffatomen oder eine Gruppe R₈-O-(CH₂)ₙ darstellen, in der R₈ ein Wasserstoff, ein Alkylrest mit 1 bis 12 Kohlenstoffatomen, ein Cycloalkylrest mit 4 bis 10 Kohlenstoffatomen, ein Aralkylrest mit 7 bis 10 Kohlenstoffatomen oder ein Arylrest mit 6 bis 10 Kohlenstoffatomen ist; und n eine ganze Zahl von 1 bis 6 ist; R₇ ausserdem auch eine Gruppe OCOR₉ sein kann, wobei R₉ eine Alkylgruppe von C₁-C₆, vorzugsweise von C₁-C₄, besonders bevorzugt eine Methylgruppe ist.

4. Verwendung nach Anspruch 3, **dadurch gekennzeichnet, dass** das Kation der folgenden allgemeinen Formel (II) entspricht: 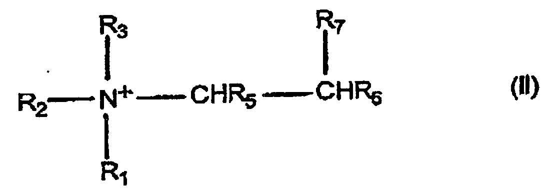
in der R₁, R₂ und R₃ gleiche oder verschiedene Reste darstellen und Alkylgruppen mit 1 bis 20 Kohlenstoffatomen, die gegebenenfalls hydroxyliert sind, Cycloalkylreste mit 4 bis 15 Kohlenstoffatomen, die gegebenenfalls mit Hydroxylgruppen substituiert sind, Aralkylgruppen mit 7 bis 15 Kohlenstoffatomen, die gegebenenfalls mit Hydroxylgruppen substituiert sind, oder Arylreste mit 6 bis 15 Kohlenstoffatomen, die gegebenenfalls mit Hydroxylgruppen substituiert sind, bezeichnen, zwei der Reste R₁, R₂ oder R₃ auch mit dem Stickstoffatom und gegebenenfalls mit einem Sauerstoff-Heteroatom oder einem anderen StickstoffHeteroatom einen heterocyclischen Ring mit 4 bis 6 Kohlenstoffatomen bilden, oder aber die Reste R₁, R₂ und R₃ jeder Ethylenreste darstellen, die in Verbindung mit einem quaternären Stickstoff und einem weiteren tertiären Stickstoffatom ein Skelett eines bicyclischen Triethylendiamins bilden,
R₅, R₆ und R₇ gleich oder verschieden sind und Wasserstoff, eine OH-Gruppe, eine Alkylgruppe mit 1 bis 12 Kohlenstoffatomen, eine Cycloalkylgruppe mit 5 bis 7 Kohlenstoffatomen, eine Alkenylgruppe mit 2 bis 15 Kohlenstoffatomen, eine Alkynylgruppe mit 3 bis 6 Kohlenstoffatomen, eine Hydroxyalkylgruppe mit 1 bis 9 Kohlenstoffatomen, eine Aralkylgruppe mit 7 bis 10 Kohlenstoffatomen, eine Arylgruppe mit 6 bis 10 Kohlenstoffatomen oder eine Gruppe R₈-O- (CH₂)ₙ darstellen, in der R₈ Wasserstoff, ein Alkylrest mit 1 bis 12 Kohlenstoffatomen, ein Cycloalkylrest mit 4 bis 10 Kohlenstoffatomen, ein Aralkylrest mit 7 bis 10 Kohlenstoffatomen oder ein Arylrest mit 6 bis 10 Kohlenstoffatomen ist; und n eine ganze Zahl von 1 bis 6 ist, R₇ ausserdem auch eine Gruppe OCOR₉ darstellen kann, wobei R₉ eine Alkylgruppe von C₁ bis C₆, vorzugsweise von C₁ bis C₄, insbesondere eine Methylgruppe ist.

5. Verwendung nach einem der Ansprüche 1 bis 2, **dadurch gekennzeichnet, dass**
- R₁, R₂ und R₃ gleich oder verschieden sind, eine lineare C₁-C₄ Alkylgruppe, vorzugsweise ein C₁-C₃ Alkyl, insbesondere ein C₁-C₂ Alkyl und bevorzugt Methyl, darstellen,
- R₅ H, OH, eine Methylgruppe oder eine Hydroxymethylgruppe darstellt,
- R₆ H, OH, eine Methylgruppe oder eine Hydroxymethylgruppe darstellt,
- R₇ H, OH, eine Methylgruppe, eine Hydroxymethylgruppe oder eine Acetylgruppe darstellt.

6. Verwendung nach einem der Ansprüche 1 bis 2, **dadurch gekennzeichnet, dass**
- R₁, R₂ und R₃ gleich oder verschieden sind und eine C₁-C₄ Alkylgruppe, vorzugsweise ein C₁-C₃ Alkyl, insbesondere ein C₁-C₂ Alkyl und vorzugsweise Methyl, darstellen,
- R₅ H oder eine C₁-C₄ Alkylgruppe darstellt,
- R₆ H, OH oder eine C₁-C₄ Alkylgruppe darstellt,
- R₇ H, OH oder eine C₁-C₄ Alkylgruppe oder Acetylgruppe darstellt,
ohne dass die Gesamtanzahl Kohlenstoffatome von R₁ bis R₇ 8 überschreitet, vorzugsweise 6.

7. Verwendung nach einem der Ansprüche 1 bis 2, **dadurch gekennzeichnet, dass** wenigstens eine, vorzugsweise zwei und besonders bevorzugt die drei Gruppen R₁ bis R₃ eine Methylgruppe darstellen, R₅, R₆ und R₇ wie oben definiert sind und bevorzugt eine einzige von R₅ bis R₇ OH ist.

8. Verwendung nach einem der Ansprüche 1 bis 2, **dadurch gekennzeichnet, dass** R₁ bis R₃ eine C₁-C₄ Alkylgruppe, eine C₁-C₄ Hydroxyalkylgruppe darstellen, und R₅ bis R₇ H oder OH darstellen, letztere zusammen vorzugsweise eine einzige OH-Gruppe in der Omega-Stellung bezogen auf das mittlere Stickstoffatom aufweisen.

9. Verwendung nach einem der Ansprüche 1 bis 2, **dadurch gekennzeichnet, dass** die Zusammensetzung das Hydrogencarbonat von Cholin ist.

10. Verwendung nach einem der Ansprüche 1 bis 2, **dadurch gekennzeichnet, dass** der Katalysator in fester Form durch Ablagern des Hydrogencarbonates auf einem Mineral oder durch kovalente Bindung auf einem Harz erhalten wird.

11. Verwendung nach einem der vorangehenden Ansprüche, **dadurch gekennzeichnet, dass** die Menge des Katalysators von 300 ppm bis 5000 ppm (ausgedrückt in Gewicht), vorzugsweise von 500 ppm bis 3500 ppm, ist, bezogen auf die Gesamtmenge der Isocyanatausgangsmenge.

12. Verwendung nach einem der vorangehenden Anspruche zur Herstellung des Trimers von Isophorondiisocyanat oder eines gemischten Trimers von Isophorondiisocyanat und Hexamethylendiisocyanat, in dem das Verhältnis des Hexamethyendiisocyanats von 5 bis 95 Gew% variiert.

13. Verwendung nach einem der Ansprüche 1 bis 11 zur Herstellung des Trimers von Norbornandiisocyanat oder eines gemischten Trimers von Norbornandiisocyanat und Hexamethylendiisocyanat, in dem das Verhältnis des Hexamethyendiisocyanats von 5 bis 95 Gew% variiert.

14. Verwendung nach einem der Ansprüche 1 bis 11 zur Herstellung des Trimes von 4,4'-Dicyclohexylmethandiyl-diisocyanat oder eines gemischten Trimers 4,4'-Dicyclohexylmethandi-yl-diisocyanat und Hexamethylendiisocyanat, in dem das Verhältnis von Hexamethylendiisocyanat von bis 95 Gew.% variiert.

## Claims

1. Use as a cyclotrimerisation reaction catalyst of isocyanates and of a hydrogen carbonate of a cation which, either as it is or in complexed form with a complexing agent, has an ionic or molecular radius above 1 Å, preferably 1.5 Å, and is at least partially soluble in the reaction medium.

2. Use according to Claim 1, **characterised in that** the isocyanates are chosen form among isophorone di-isocyanate, norbomane di-isocyanate and di-isocyanate of 4,4'-dicyclohexyl methane diyl, alone or in a mixture with other di-isocyanates.

3. Use according to one of the Claims 1 and 2, **characterised in that** the cation complies with the general formula I: 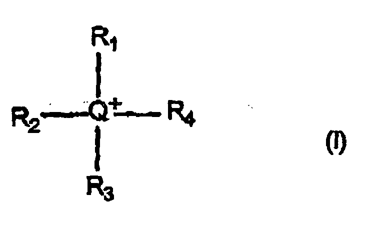 in which
Q represents an atom of nitrogen, phosphorus or sulphur; and R₁, R₂, R₃ and R₄, identical or different, designate alkyl groups, possibly hydroxylated, having 1 to 20 carbon atoms, the cycloalkyl remainder having 4 to 15 carbon atoms, possibly substituted by hydroxyl groups, the aralkyl remainder having 7 to 15 carbon atoms, possibly substituted by hydroxyl groups or the aryl remainder having 6 to 15 carbon atoms, possibly substituted by hydroxyl groups or else when Q is N, two of the R₁, R₇, R₃ or R₄ remainders can also form with the nitrogen atom and, where appropriate, with a hetero-atom, particularly of oxygen or nitrogen, a heterocyclic core having 4 to 6 carbon atoms, or else when Q is N the R₁, R₂ and R₃ each represents ethylene remainders which form, in association with the quaternary nitrogen atom and another tertiary nitrogen atom, a bicyclic triethylene diamine skeleton,
or one of R₁ to R₄ represents a group 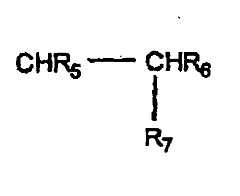
in which R₅, R₆ and R₇, identical or different, represent hydrogen, an OH group, an alkyl group having 1 to 12 carbon atoms, a cyclo alkyl group having 5 to 7 carbon atoms, an alkenyl group having from 2 to 15 carbon atoms, an alkynyl group having from 3 to 6 carbon atoms, a hydroxy alkyl group having from 1 to 9 carbon atoms, an aralkyl group having from 7 to 10 carbon atoms, an aryl group having from 6 to 10 carbon atoms or a R₈-O-(CH₂)ₙ group in which R₈ is hydrogen, an alkyl remainder having from 1 to 12 carbon atoms, a cyclo alkyl remainder having from 4 to 10 carbon atoms, an aralkyl remainder having from 7 to 10 carbon atoms or an aryl remainder having from 6 to 10 carbon atoms; and n is a whole number going from 1 to 6; R₇ being able in addition also to represent an OCOR₉ group, R₉, being an alkyl group in C₁-C₆, preferably in C₁-C₄, particularly the methyl group.

4. Use according to Claim 3, **characterised in that** the cation complies with the following general formula (II): 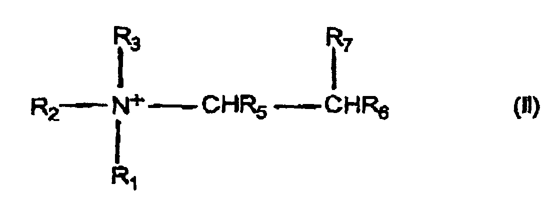 in which
R₁, R₂ and R₃ represent identical or different remainders and designate alkyl groups, possibly hydroxylated, having 1 to 20 carbon atoms, cycloalkyl remainders having from 4 to 15 carbon atoms, possibly substituted by hydroxyl groups, aralkyl remainders having 7 to 15 carbon atoms, possibly substituted by hydroxyl groups or aryl remainders having 6 to 15 carbon atoms, possibly substituted by hydroxyl groups, two of the remainders R₁, R₂ or R₃ being also able to form, with the nitrogen atom and, where applicable, with an oxygen hetero-atom or another nitrogen hetero-atom, a hetero cyclic core having 4 to 6 carbon atoms, or else the R₁, R₂ and R₃ remainders each represents ethylene remainders which, in association with the quaternary nitrogen atom and another tertiary nitrogen atom, form a skeleton of bicyclic triethylene diamine. R₅, R₆ and R₇, identical or different, represent hydrogen, an OH group, an alkyl group having to 12 carbon atoms, a cyclo-alkyl group having 5 to 7 carbon atoms, an alkenyl group having from 2 to 15 carbon atoms, an alkynyl group having from 3 to 6 carbon atoms, a hydroxy alkyl group having from 1 to 9 carbon atoms, an aralkyl group having from 7 to 10 carbon atoms, an aryl group having from 6 to 10 carbon atoms or a R₈-O-(CH₂)ₙ group in which R₈ is hydrogen, an alkyl remainder having form 1 to 12 carbon atoms, a cyclo-alkyl remainder having from 4 to 10 carbon atoms, an aralkyl remainder form 7 to 10 carbon atoms or an aryl remainder having from 6 to 10 carbon atoms; and n is a whole number going from 1 to 6; R₇ being able in addition also to represent an OCOR₉ group, R₉ being an alkyl group in C₁-C₆, preferable in C₁-C₄, particularly the methyl group.

5. Use according to one of the Claims 1 to 2, **characterised in that**:
- R₁, R₂ and R₃, identical or different, represent a linear alkyl group in C₁-C₄, preferably alkyl in C₁-C₃, especially alkyl in C₁-C₂, and preferably methyl;
- R₅ represents H, OH, the methyl group or die hydroxy methyl group;
- R₆ represents H, OH, the methyl group or the hydroxy methyl group;
- R₇ represents H, OH, the methyl group, the hydroxy methyl group or the acetyl group.

6. Use according to one of the Claims 1 to 2, **characterised in that**:
- R₁, R₂ and R₃, identical or different, represent an alkyl group in C₁-C₄, preferably alkyl in C₁-C₃, especially alkyl in C₁-C₂ and preferably methyl;
- R₅ represents H or an alkyl group in C₁-C₄;
- R₆ represents H, OH or an alkyl group in C₁-C₄;
- R₇ represents H, OH, an alkyl group in C₁-C₂, or the acetyl group;
without the total number of carbon atoms from R₁ to R₂, exceeding 8, preferably 6.

7. Use according to one of the Claims 1 to 2, **characterised in that** at least one, preferably two and most preferred three groups from R₁, to R₃ represent the methyl group, R₅, R₆ and R₇ being as defined above, and preferably only one from R₅ to R₇ being OH.

8. Use according to one of the Claims 1 to 2, **characterised in that** R₁ to R₃ represent an alkyl group in C₁-C₄ a hydroxy alkyl group in C₁-₄, and R₅ to R₇ represent H or OH, the said compounds with advantage containing a single OH group in the omega position compared with the central nitrogen atom,

9. Use according to one of the Claims 1 to 2, **characterised in that** the compound is choline hydrogen carbonate.

10. Use according to one of the Claims 1 to 2, **characterised in that** the catalyst is in solid form obtained by depositing hydrogen carbonate onto a mineral or by covalent fixing onto a resin.

11. Use according to any one of the above claims, **characterised in that** the quantity of catalyst is from 300 ppm to 5000 ppm (expressed by weight), with advantage from 500 ppm to 3500 ppm, compared with the total quantity of the starting isocyanates.

12. Use according to any one of the above claims, for preparation of the trimer of the isophorone di-isocyanate or of a mixed trimer of isophorone di-isocyanate and hexamethylene di-isocyanate in which the proportion of hexamethylene di-isocyanate varies from 5 to 95% by weight

13. Use according to any one of the claims I to 11, for preparation of the trimer of norbomane di-isocyanate or of a mixed trimer of norbomane di-isocyanate and hexamethylene di-isocyanate in which the proportion of hexamethylene di-isocyanate varies from 5 to 95% by weight.

14. Use according to any one of the Claims 1 to 11, for preparation of the trimer of 4,4'-dicyclohexyl methane diyl di-isocyanate or of a mixed trimer of di-isocyanate of 4,4'-dicyclohexyl methane diyl and of hexamethylene di-isocyanate in which the proportion of hexamethylene di-isocyanate varies from 5 to 95% by weight.
